# EUROPEAN PATENT SPECIFICATION

(11) **EP 3 763 610 B1**
(45) Date of publication and mention of the grant of the patent: **31.12.2025**
(21) Application number: 20178700.9
(22) Date of filing: 08.06.2020
(51) Int. Cl.: B62J 11/19, B62K 11/04, B62M 7/02

(54) **STRADDLED VEHICLE**
GRÄTSCHSITZFAHRZEUG
VÉHICULE À ENFOURCHER

(30) Priority: 09.07.2019 JP 2019127810
(43) Date of publication of application: 13.01.2021
(73) Proprietor: YAMAHA HATSUDOKI KABUSHIKI KAISHA, Iwata-shi, Shizuoka 438-8501 (JP)
(72) Inventor: RASRIWONG, Apivat, 10540 Bangsaothong (TH); SARUNYAKOOB, Kornrapat, 10540 Bangsaothong (TH); PAYOTHONSIRI, Thanadon, 10540 Bangsaothong (TH)
(74) Representative: Marks & Clerk LLP

(56) References cited:
- US-A1- 2013 026 784
- US-A1- 2014 035 269

## Description

### FIELD OF INVENTION

The present invention relates to a straddled vehicle or saddle-ride type vehicle.

### BACKGROUND TO INVENTION

Japanese Laid-Open Patent Publication No. 2016-222086 discloses a straddled vehicle in which the main frame of the vehicle body is exposed to the outside. The main frame extends rearward from the head pipe and an electric component is disposed inside the main frame.

When an electric component and an electric component cover for protecting the electric component are disposed on an/the outside of a main frame in a straddled vehicle in which the main frame is exposed to the outside, there is a need to block any gaps between the main frame and the electric component cover in order to prevent the intrusion of rain or dust into the inside of the electric component cover, and it is difficult to ensure heat dissipation of the electric component.

It is an object of at least one embodiment of at least one aspect of the present invention to obviate or at least mitigate one or more problems or disadvantages in the prior art.

An object of at least one embodiment of one aspect of the present invention is to seek to ensure heat dissipation of an electric component and suppress the intrusion of rain or dust into the inside of an electric component cover in a straddled vehicle in which the main frame is exposed to the outside and the electric component cover that covers the electric component is disposed on the outside of the main frame.

Document US2014/035269A1 shows the preamble of claim 1.

### SUMMARY OF INVENTION

Various aspects of the present invention are defined in the independent claims appended hereto. Some optional and/or preferred features are defined in the independent claims.

According to an aspect of the present invention there is provided a straddled vehicle. The straddled vehicle may comprise or include a head pipe, a main frame, a front fork(s), a front wheel, a fuel tank, an electric component, an electric component cover, and/or an air vent. The main frame may be exposed to an/the outside and may extend rearward from the head pipe. The main frame may include a side surface 53861223-1 portion that may extend in an/the up-down direction in a cross-section perpendicular to the front-back direction. The front fork(s) may be rotatably supported by the head pipe. The front wheel may be rotatably supported by the front fork(s). The fuel tank may be disposed behind the head pipe. An electric component may be disposed in a position on the outside in the vehicle width direction and may be overlapping the side portion of the main frame as seen in a/the vehicle side view. The electric component cover may be disposed so as to be exposed to an/the outside within the width of the side surface portion of the main frame, and may cover the electric component from an/the outside in a/the vehicle width direction. The electric component cover may include a fitting portion for fitting with a/the side surface portion of the main frame. At least a portion of the air vent may be disposed in a position between the side surface portion of the main frame and the fitting portion of the electric component cover and in a position that may overlap the front fork(s) as seen in a/the vehicle front view.

At least a portion of the air vent may be disposed between the side surface portion of the main frame and the fitting portion of the electric component cover and in a position that may overlap the front fork(s) as seen in a/the vehicle front view in the straddled vehicle according to the present embodiment. As a result, heat dissipation of the electric component can be sought to be ensured by means of the air vent and the intrusion of rain or dust that is scattered from the front of the vehicle can be sought to be suppressed by the front fork(s).

The fitting portion preferably may include a first fitting portion that may be positioned on the vehicle forward side as seen in the vehicle side view. At least a portion of the air vent may be provided between the side surface portion of the main frame and the first fitting portion, and may overlap the front fork as seen in the vehicle front view. As a result, the intrusion of rain or dust that is scattered from the front of the vehicle into the inside of the electric component cover from the air vent can be sought to be effectively suppressed by the front fork(s).

The electric component cover preferably may include a cover body portion and an attachment portion that may be formed in the front-back direction of the cover body portion and may be for attaching the cover body portion to the main frame. In this case, the cover body portion can be provided over the entire width of the frame and a space for accommodating the electric component can be easily ensured.

An/the entirety of the electric component cover preferably may overlap the side surface portion of the main frame as seen in the vehicle side view. In this case, the electric component cover can be easily fixed to the main frame.

The length in the front-back direction of the electric component cover may be preferably longer than the length in the up-down direction. In this case, a space for accommodating the electric component can be sufficiently ensured.

The straddled vehicle preferably may further include a tank cover for protecting the fuel tank. The tank cover may include a tank side cover that covers the fuel tank from the outside in the vehicle width direction. The electric component cover may be disposed lower than the tank side cover and at least a portion of the electric component cover overlaps the tank side cover as seen in the vehicle plan view. In this case, the intrusion of rain or dust scattered from above the vehicle into the inside of the electric component cover can be suppressed by the tank side cover.

At least a portion of the air vent preferably may overlap the tank side cover as seen in the vehicle plan view. In this case, the intrusion of rain or dust scattered into the inside of the electric component cover can be sought to be suppressed by the tank side cover.

The electric component cover preferably may be disposed further to an/the inside in the vehicle width direction than the tank side cover as seen in the vehicle front view. In this case, air resistance received by the electric component cover can be suppressed.

Either one of the side surface cover of the main frame or the electric component cover preferably may include a bracket for attaching the electric component. In this case, the installation of the electric component can be facilitated.

The electric component cover preferably may overlap an/the entirety of the electric component in the electric component cover as seen in the vehicle front view. In this case, the electric component may not be impacted very much even if rain or dust has intruded into the inside of the electric component cover from the vent.

The straddled vehicle may preferably further include a front direction indicator supported on the front forks. The electric component cover may be disposed further to the inside in the vehicle width direction than the front direction indicator as seen in the vehicle front view. In this case, air resistance received by the electric component cover can be suppressed.

According to the present invention, heat dissipation of an electric component is sought to be ensured and the intrusion of rain or dust into the inside of an electric component cover is suppressed in a straddled vehicle in which the main frame is exposed to the outside and the electric component cover that covers the electric component is disposed on the outside of the main frame.

### BRIEF DESCRIPTION OF DRAWINGS

Embodiments of the present invention will now be described by way of example only, and with reference to the accompanying drawings, which are:
FIG. 1 a side view of a straddled vehicle;
FIG. 2 a front view of a straddled vehicle;
FIG. 3 a plan view of a straddled vehicle;
FIG. 4 a partial cross-sectional view along line IV-IV in FIG. 1;
FIG. 5 a partial cross-sectional view along line V-V in FIG. 2;
FIG. 6 a side view of a main frame when an electric component cover is removed;
FIG. 7 an outside view of the electric component cover, and
FIG. 8 an inside view of the electric component cover.

### DETAILED DESCRIPTION OF EMBODIMENTS

A straddled vehicle according to a first embodiment of the present invention will now be described with reference to the accompanying drawings. In the following explanations, the terms for indicating direction such as "front and rear," "up and down," and "left and right" and the like represent directions based on the directions as seen by the rider/driver while riding/driving the straddled vehicle 100. The outside in the vehicle width direction means the sides farther from the center line CL of the straddled vehicle in the vehicle width direction. The inside in the vehicle width direction means the sides closer to the center line CL of the straddled vehicle in the vehicle width direction. The center line CL of the straddled vehicle extends in the front-back direction so as to pass through the center of the straddled vehicle in the vehicle width direction.

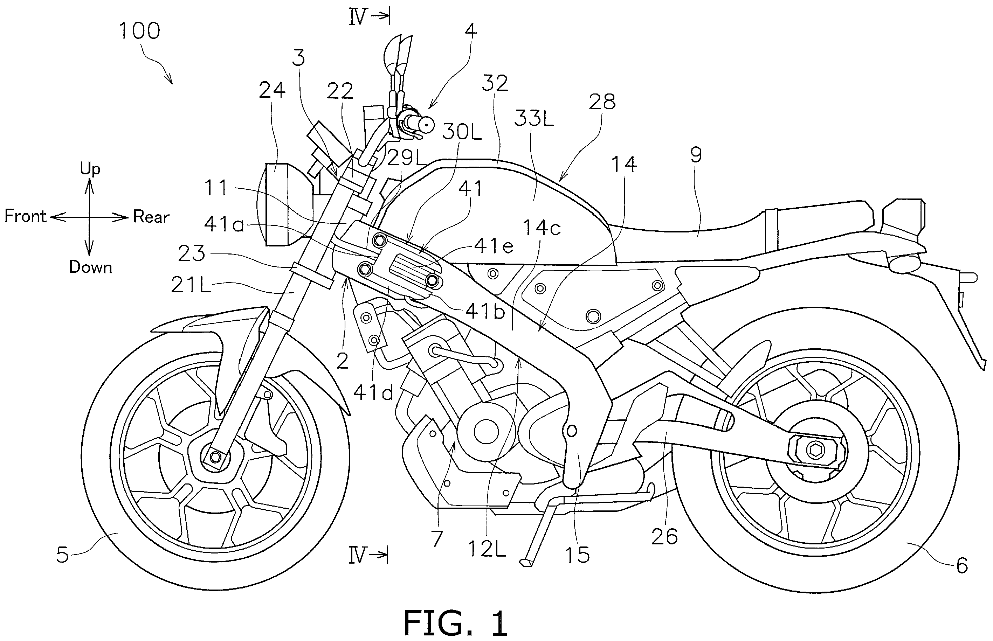

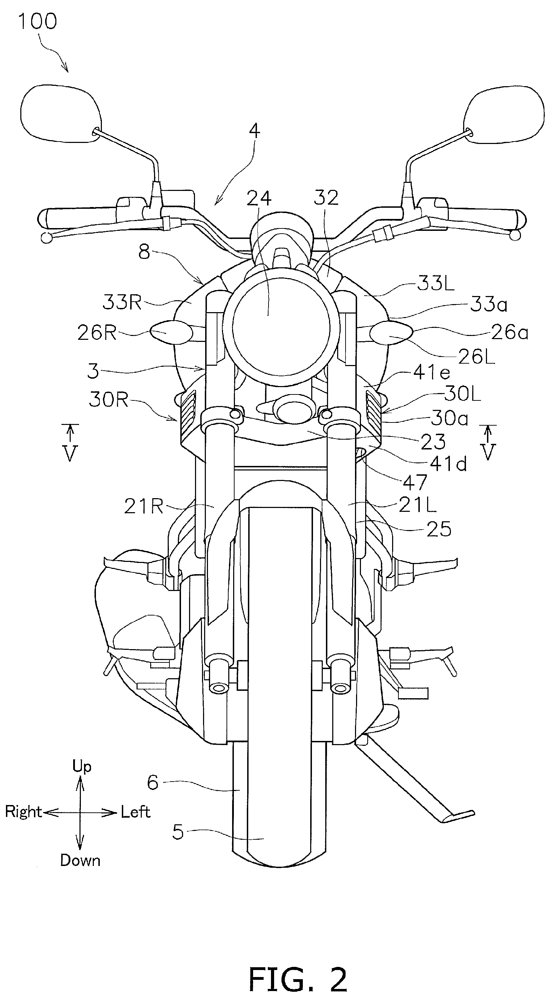

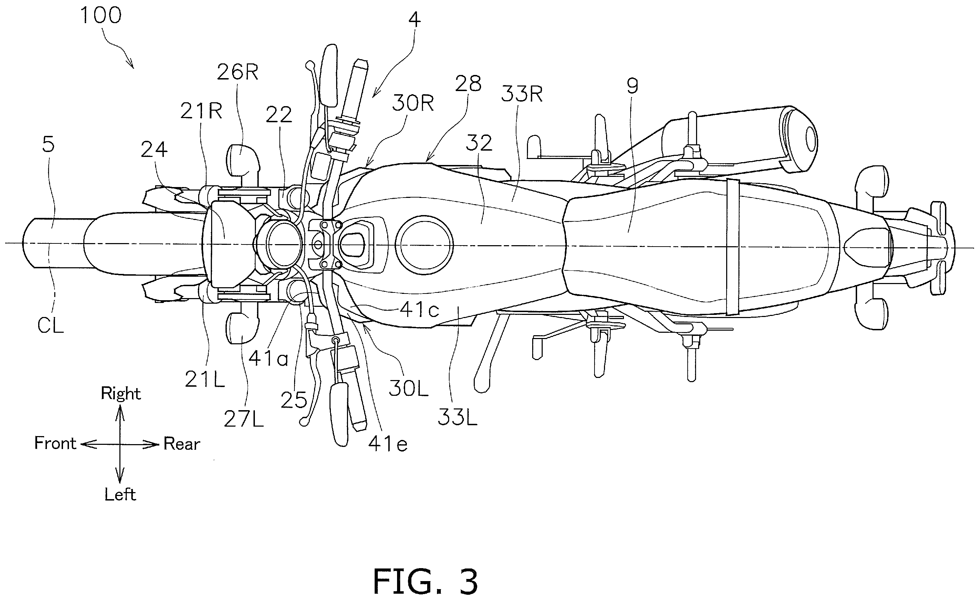

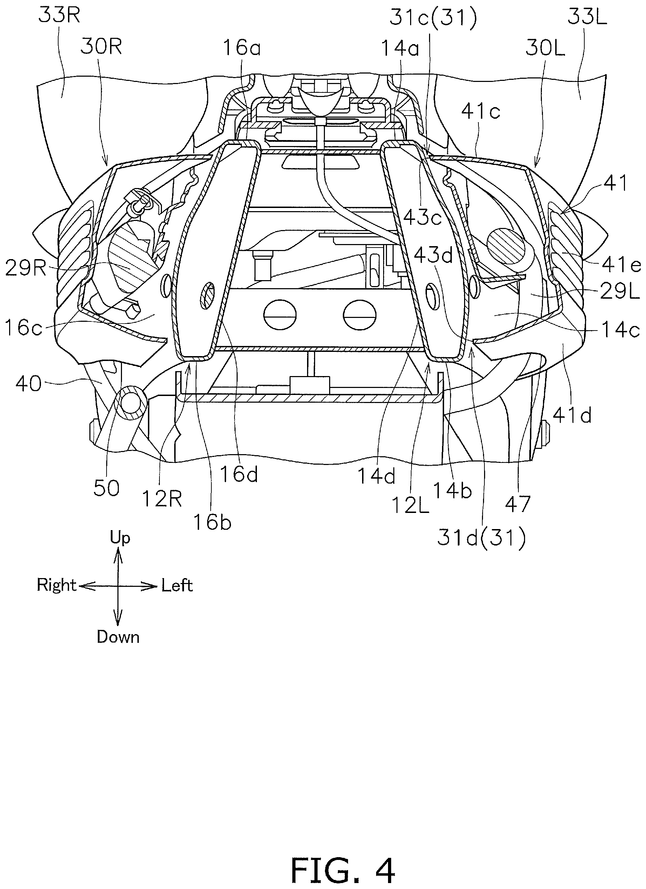

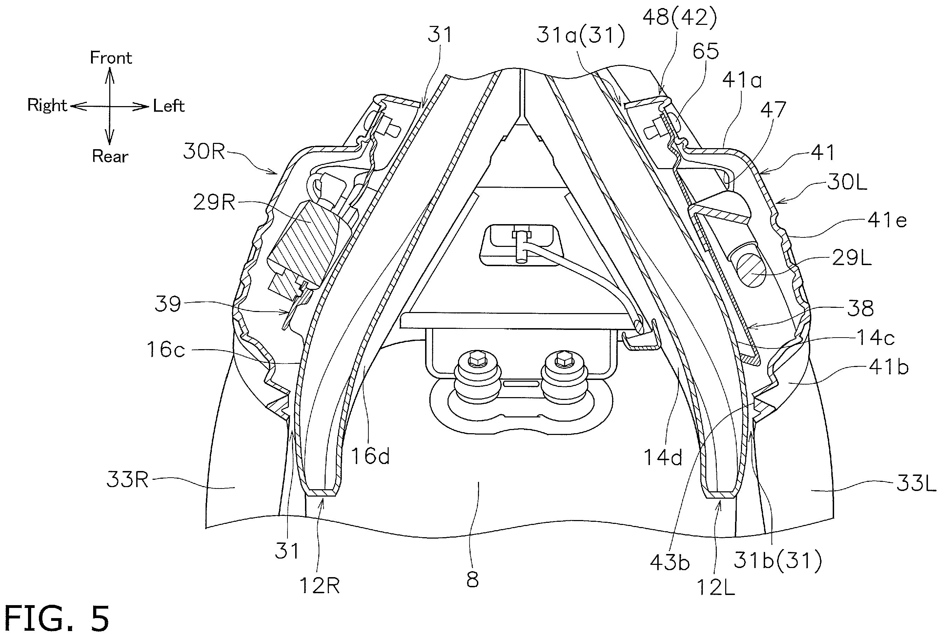

FIG. 1 is a side view of a straddled vehicle 100. FIG. 2 is a front view of the straddled vehicle 100. FIG. 3 is a plan view of a straddled vehicle 100. FIG. 4 is a partial cross-sectional view along line IV-IV in FIG. 1. FIG. 5 is a partial cross-sectional view along line V-V in FIG. 2.

The straddled vehicle 100 includes a vehicle body frame 2, a steering device 3, a handle 4, a front wheel 5, a rear wheel 6, an engine 7, a fuel tank 8 (see FIG. 5), and a seat 9 for a rider/driver to sit on.

The vehicle body frame 2 includes a head pipe 11, a main frame 12L, and a main frame 12R. The head pipe 11 is disposed in the center of the straddled vehicle 100 in the vehicle width direction.

The main frame 12L is disposed to the left side of the center of the straddled vehicle 100 in the vehicle width direction. The front end of the main frame 12L is connected to the head pipe 11. The term "connect" is not limited to direct connections and includes indirect connections. Moreover, the term "connect" is not limited to fixing separate members to each other but also includes a plurality of portions that are continuous within one member. The main frame 12L extends rearward from the head pipe 11. The inside of the main frame 12L is hollow.

At least a portion of the main frame 12L is exposed to the outside on the outside in the vehicle width direction and is visible as seen in the vehicle side view. That is, the entirety of the main frame 12L is not covered by a cowl or a cover or the like. The entirety of the main frame 12L of the present embodiment is exposed to the outside on the outside in the vehicle width direction except for a portion covered by a below-mentioned electric component cover 30L.

The main frame 12L includes a front-back extending portion 14 and a downward extending portion 15. The front-back extending portion 14 extends rearward and downward from the head pipe 11. The dimension of the front-back extending portion 14 in the front-back direction is larger than the dimension in the up-down direction. As illustrated in FIG. 4 and 5, a front side portion of the front-back extending portion 14 is formed so as to extend wider to the outside in the vehicle width direction while extending from the head pipe 11 toward the rear. The downward extending portion 15 extends downward from the rear end of the front-back extending portion 14.

As illustrated in FIG. 4, the front-back extending portion 14 includes an upper surface portion 14a, a lower surface portion 14b, a first side surface portion 14c, and a second side surface portion 14d. The upper surface portion 14a, the lower surface portion 14b, the first side surface portion 14c, and the second side surface portion 14d extend rearward and downward from the head pipe 11.

The upper surface portion 14a and the lower surface portion 14b extend in the vehicle width direction in a cross-section perpendicular to the front-back direction. The first side surface portion 14c and the second side surface portion 14d extend in the up-down direction in a cross-section perpendicular to the front-back direction.

The first side surface portion 14c is the side surface on the outside in the vehicle width direction of the front-back extending portion 14. The first side surface portion 14c is exposed to the outside and is visible as seen in the vehicle side view. The second side surface portion 14d is the side surface on the inside in the vehicle width direction of the front-back extending portion 14 and is disposed so as to be separated by a gap from the first side surface portion 14c in the vehicle width direction. The up-down direction dimensions of the first side surface portion 14c and the second side surface portion 14d are greater than the vehicle width direction dimensions of the upper surface portion 14a and the lower surface portion 14b in a cross-section perpendicular to the front-back direction.

The main frame 12R is disposed so as to be separated from the main frame 12L with a gap in the vehicle width direction to the right side of the center of the straddled vehicle 100 in the vehicle width direction. The main frame 12R exhibits left-right symmetry with the main frame 12L and has a similar configuration to the main frame 12L. The main frame 12R includes a front-back extending portion 16 and a downward extending portion that is not illustrated. The front-back extending portion 16 includes an upper surface portion 16a, a lower surface portion 16b, a first side surface portion 16c, and a second side surface portion 16d. A detailed explanation of the main frame 12R is omitted.

The steering device 3 is rotatably supported on the head pipe 11. The steering device 3 includes a steering shaft (not illustrated), a front fork 21L, a front fork 21R, a top bridge 22, and a bottom bridge 23.

The steering shaft is inserted into the head pipe 11 and is rotatably supported by the head pipe 11. The upper end of the steering shaft is coupled to the top bridge 22 and the lower end is coupled to the bottom bridge 23.

The front fork 21L is disposed to the left side of the center of the straddled vehicle 100 in the vehicle width direction. The front fork 21L extends forward and downward from the top bridge 22 and the lower end of the front fork 21L is coupled to the front wheel 5. The front fork 21L is coupled to the steering shaft via the top bridge 22 and the bottom bridge 23, and is rotatably supported by the head pipe 11. The front fork 21L supports a headlight 24 disposed in front of the head pipe 11. The front fork 21L supports a front direction indicator 26L disposed to the left side of the headlight 24

The front fork 21R is disposed to the right side of the center of the straddled vehicle 100 in the vehicle width direction. The front fork 21R exhibits left-right symmetry with the front fork 21L and has a similar configuration to the front fork 21L. Therefore, a detailed explanation of the front fork 21R is omitted. The front fork 21R supports a front direction indicator 26R disposed to the right side of the headlight 24. In FIG. 1, illustration of the front direction indicator 26L and 26R are omitted.

The handle 4 is fixed to an upper portion of the steering device 3. The engine 7 is disposed below the main frames 12L and 12R. The engine 7 is exposed to the outside and is not covered by a member such as a cowl or a cover.

The front wheel 5 is rotatably supported by the front forks 21L and 21R. The rear wheel 6 is rotatably supported by swing arms 26 coupled to the rear ends of the main frames 12L and 12R. The fuel tank 8 is disposed behind the head pipe 11 and above the main frames 12L and 12R. The seat 9 is disposed behind the fuel tank 8.

The straddled vehicle 100 further includes a tank cover 28, an electric component 29L, an electric component 29R, the electric component cover 30L, and an electric component cover 30R, and an air vent 31.

The tank cover 28 is attached to the vehicle body frame 2 or to the fuel tank 8 so as to cover the outside of the fuel tank 8. The tank cover 28 includes a tank center cover 32, a tank side cover 33L, and a tank side cover 33R.

The tank center cover 32 is disposed above the fuel tank 8. The tank side covers 33L and 33R cover the fuel tank 8 from the outside in the vehicle width direction. The tank side cover 33L is disposed on the left side of the fuel tank 8 and covers the fuel tank 8 from the outside in the vehicle width direction. The tank side cover 33R is disposed on the right side of the fuel tank 8 and covers the fuel tank 8 from the outside in the vehicle width direction. In the present embodiment, the tank center cover 32 and the tank side covers 33L and 33R are configured as separate bodies, but may be formed in an integrated manner.

At least a portion of the electric component 29L is disposed on the outside in the vehicle width direction of the main frame 12L and in a position that overlaps the main frame 12L as seen in the vehicle side view. The entirety of the electric component 29L overlaps the electric component cover 30L in the electric component cover 30L when seen in the vehicle plan view. Specifically, as illustrated in FIG. 4, the electric component 29L is disposed further to the outside in the vehicle width direction than a below-mentioned upper end portion 34 in the electric component cover 30L. The electric component 29L is disposed further to the outside in the vehicle width direction than a below-mentioned upper air vent 31c in the electric component cover 30L.

The electric components 29L and 29R are components such as an ignition coil, a fuse box, or a harness connected to an electric component body such as the headlight. The electric component 29L of the present embodiment is a harness connected to an electric component body such as the headlight 24.

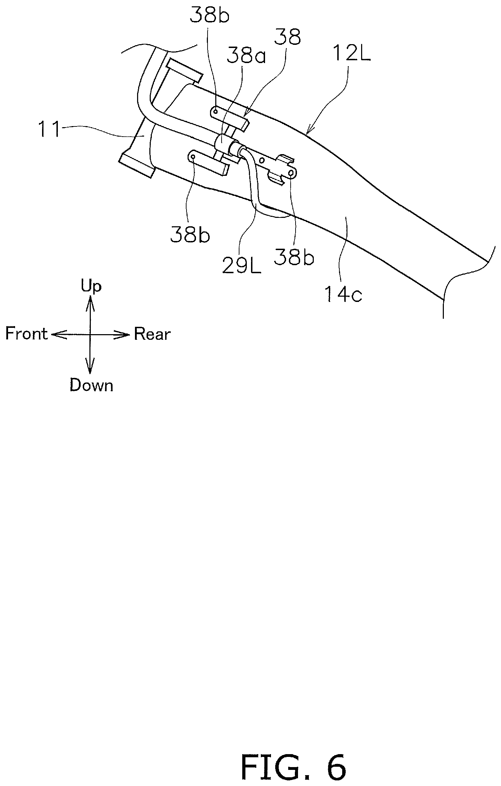

FIG. 6 is a side view of the main frame 12L when the electric component cover 30L is removed from the main frame 12L. The electric component 29L is attached to a bracket 38 fixed to the first side surface portion 14c. The bracket 38 is fixed to the first side surface portion 14c with a means such as, for example, welding. The entirety of the bracket 38 overlaps the first side surface portion 14c as seen in the vehicle side view. The bracket 38 includes a cylindrical support portion 38a that supports the electric component 29L and a plurality of nut portions 38b for fixing the electric component cover 30. The electric component 29L extends rearward from the front of the head pipe 11 toward the support portion 38a and extends downward from the support portion 38a and is routed from the first side surface portion 14c side to the second side surface portion 14d side.

The electric component 29R is an ignition coil as illustrated in FIG. 4 and 5. The electric component 29R is disposed on the outside in the vehicle width direction of the main frame 12R and in a position that overlaps the main frame 12R as seen in the vehicle side view. The entirety of the electric component 29R overlaps the first side surface portion 16c as seen in the vehicle side view. The electric component 29R is disposed above the engine 7 and is connected to the engine 7 via a cord 40 that extends downward from a rear portion of the electric component 29R. The electric component 29R is attached to a bracket 39 fixed to the first side surface portion 16c.

The electric component cover 30L covers the electric component 29L from the outside in the vehicle width direction. As illustrated in FIG. 1, the electric component cover 30L is disposed so as to be exposed to the outside within the width of the first side surface portion 14c. The electric component cover 30L is substantially rectangular as seen in the vehicle side view and extends in the direction along the front-back extending portion 14. The length in the front-back direction of the electric component cover 30L is longer than the length in the up-down direction as seen in the vehicle side view. The electric component cover 30L is disposed near the head pipe 11 and the entirety of the electric component cover 30L overlaps the first side surface portion 14c as seen in the vehicle side view. As illustrated in FIG. 2, the electric component cover 30L overlaps a portion of the bottom bridge 23 as seen in the vehicle front view. The electric component cover 30L overlaps a portion of the front fork 21L as seen in the vehicle front view.

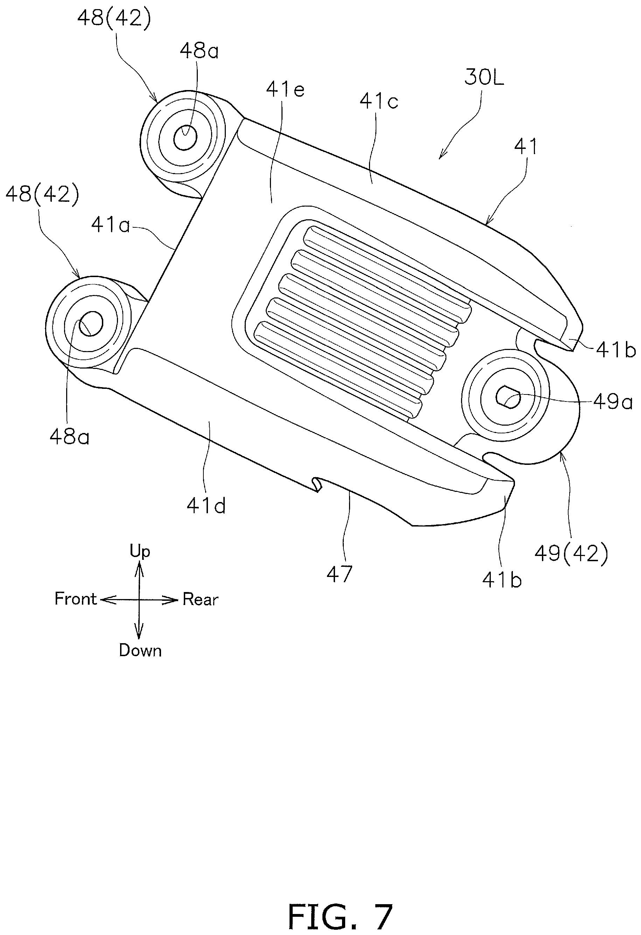

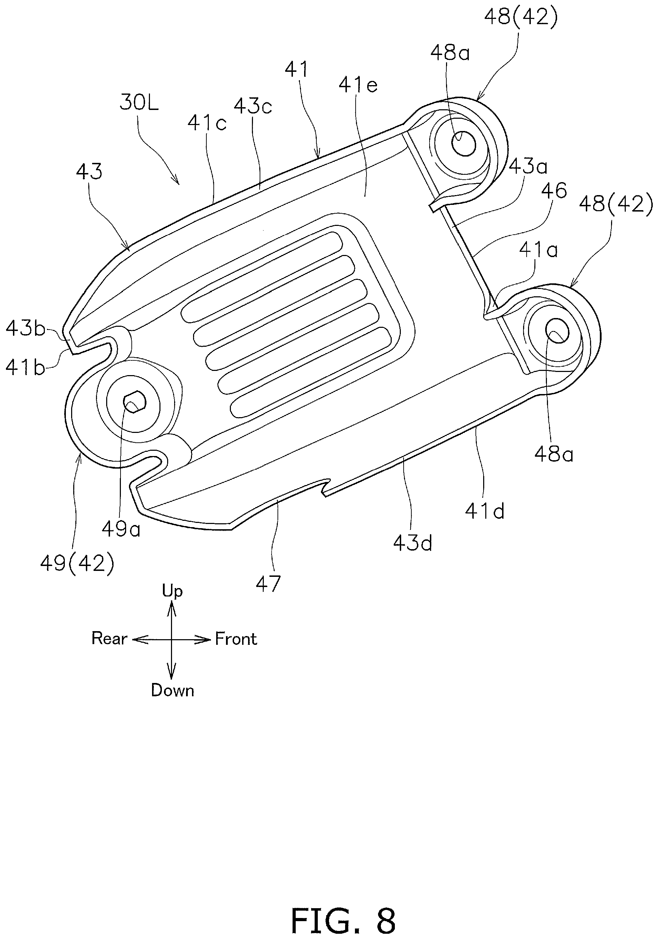

FIG. 7 is an inside view of the electric component cover 30L. FIG. 8 is an outside view of the electric component cover 30L. As illustrated in FIG. 7 and 8, the electric component cover 30L includes a cover body portion 41, a plurality of attachment portions 42, and a fitting portion 43.

The cover body portion 41 includes a front surface portion 41a, a rear surface portion 41b, an upper surface portion 41c, a lower surface portion 41d, and a side surface portion 41e. The front surface portion 41a, the rear surface portion 41b, the upper surface portion 41c, the lower surface portion 41d, and the side surface portion 41e are exposed to the outside. The front surface portion 41a and the rear surface portion 41b extend in the vehicle width direction and in the up-down direction. The dimensions in the up-down direction of the front surface portion 41a and the rear surface portion 41b are greater than the dimensions in the vehicle width direction of the front surface portion 41a and the rear surface portion 41b. The upper portions of the front surface portion 41a and the rear surface portion 41b are positioned further to the rear than the lower portions thereof. The front surface portion 41a overlaps the front fork 21L as seen in the vehicle front view (see FIG. 2). In the present embodiment, the entirety of the front surface portion 41a overlaps the front fork 21L as seen in the vehicle front view. The front surface portion 41a is positioned further to the inside in the vehicle width direction than an outermost end 25 in the vehicle width direction of the front fork 21L as seen in the vehicle front view. The front surface portion 41a includes a recessed portion 46 for allowing the electric component 29L to pass through. The recessed portion 46 is formed so as to be recessed from the inside in the vehicle width direction to the outside in the vehicle width direction near the middle of the front surface portion 41a.

The upper surface portion 41c and the lower surface portion 41d extend in the vehicle width direction and in the front-back direction, and are connected to the front surface portion 41a and the rear surface portion 41b. Front portions of the upper surface portion 41c and the lower surface portion 41d are positioned above the rear portions thereof. In the present embodiment, a portion of the upper surface portion 41c and a portion of the lower surface portion 41d, overlap the front fork 21L as seen in the vehicle front view. The lower surface portion 41d includes a recessed portion 47 for allowing the electric component 29L to pass through. The recessed portion 47 is formed so as to be recessed from the inside in the vehicle width direction to the outside in the vehicle width direction near the rear portion of the lower surface portion 41d.

The side surface portion 41e is connected to the front surface portion 41a, the rear surface portion 41b, the upper surface portion 41c, and the lower surface portion 41d. The side surface portion 41e is disposed so as to be separated by a gap from the first side surface portion 14c in the vehicle width direction.

With respect to the front surface portion 41a, the rear surface portion 41b, the upper surface portion 41c, and the lower surface portion 41d, the projected portion when viewing the cover body portion 41 from the front is set as the front surface portion 41a, the projected portion when viewing the cover body portion 41 from the rear is set as the rear surface portion 41b, the projected portion when viewing the cover body portion 41 from above is set as the upper surface portion 41c, and the projected portion when viewing the cover body portion 41 from below is set as the lower surface portion 41d, and at least portions of the four surface portions of the front surface portion 41a, the rear surface portion 41b, the upper surface portion 41c, and the lower surface portion 41d are configured so as to overlap. Specifically, at least a portion of the front surface portion 41a, for example, may be configured so as to overlap at least a portion of the upper surface portion 41c and/or the lower surface portion 41d.

The plurality of attachment portions 42 are formed integrally with the cover body portion 41 in the front-back direction of the cover body portion 41. Specifically, the plurality of attachment portions 42 include a pair of attachment portions 48 and an attachment portion 49.

The pair of attachment portions 48 are formed so as to protrude forward from both ends of the front surface portion 41a. The pair of attachment portions 48 each include a bolt insertion hole 48a for fixing the cover body portion 41 to the bracket 38.

The attachment portion 49 is formed near the middle of the rear surface portion 41b. The attachment portion 49 includes a bolt insertion hole 49a for fixing the cover body portion 41 to the bracket 38. Bolts 65 inserted from the bolt insertion holes 48a and 49a are screwed with nut portions 38b of the bracket 38 (see FIG. 5). As a result, the cover body portion 41 is fixed to the bracket 38.

The fitting portion 43 is a fitting portion for fitting with the first side surface portion 14c and means the end surface of the cover body portion 41 facing the first side surface portion 14c. In the present embodiment, the entirety of the fitting portion 43 is disposed so as to be separated from the first side surface portion 14c by a gap in the vehicle width direction. That is, a gap is provided between the fitting portion 43 and the first side surface portion 14c. At least a portion of the fitting portion 43 overlaps the front fork 21L as seen in the vehicle front view (see FIG. 2).

As illustrated in FIG. 8, the fitting portion 43 includes a front end portion 43a, a rear end portion 43b, an upper end portion 43c, and a lower end portion 43d. The front end portion 43a is positioned on the vehicle forward side as seen in the vehicle side view. The front end portion 43a according to the present embodiment is the end surface of the front surface portion 41a facing the first side surface portion 14c. The front end portion 43a is an example of a first fitting portion. The entirety of the front end portion 43a overlaps the front fork 21L as seen in the vehicle front view. The front end portion 43a is positioned further to the inside in the vehicle width direction than the outermost end 25 in the vehicle width direction of the front fork 21L as seen in the vehicle front view.

The rear end portion 43b is positioned on the vehicle rearward side as seen in the vehicle side view. The rear end portion 43b is the end surface of the rear surface portion 41b facing the first side surface portion 14c. The upper end portion 43c is positioned on the vehicle upward side as seen in the vehicle side view. The upper end portion 43c is the end surface of the upper surface portion 41c facing the first side surface portion 14c. A portion of the upper end portion 43c overlaps the front fork 21L as seen in the vehicle front view. The lower end portion 43d is positioned on the vehicle downward side as seen in the vehicle side view. The lower end portion 43d is the end surface of the lower surface portion 41d facing the first side surface portion 14c. A portion of the lower end portion 43d overlaps the front fork 21L as seen in the vehicle front view. As illustrated in FIG. 4, the lower end portion 43d is disposed further to the outside in the vehicle width direction than the upper end portion 43c.

As described above, for example, when at least a portion of the front surface portion 41a is configured so as to overlap at least a portion of the upper surface portion 41c and/or the lower surface portion 41d while the respective projected portions when viewing the cover body portion 41 from the upper, lower, front and rear directions are set as the front surface portion 41a, the rear surface portion 41b, the upper surface portion 41c, and the lower surface portion 41d, at least a portion of the front end portion 43a overlaps at least a portion of the upper end portion 43c and/or the lower end portion 43d. That is, in the above situation, the front end portion 43a positioned on the vehicle forward side as seen in the vehicle side view includes at least a portion of the upper end portion 43c and/or the lower end portion 43d. In other words, when viewing the cover body portion 41 from the front, the visible range of the fitting portion 43 corresponds to the front end portion 43a.

The electric component cover 30L is disposed below the tank side cover 33L. At least a portion of the electric component cover 30L preferably overlaps the tank side cover 33L as seen in the vehicle plan view. In the present embodiment, as illustrated in FIG. 3 and 5, at least a portion of the upper surface portion 41c and the rear surface portion 41b of the electric component cover 30L overlap the tank side cover 33L as seen in the vehicle plan view. Specifically, the electric component cover 30L overlaps the upper end portion 43c and the rear end portion 43b as seen in the vehicle plan view.

As illustrated in FIG. 2, the electric component cover 30L is disposed further to the inside in the vehicle width direction than the tank side cover 33L as seen in the vehicle front view. Specifically, the outermost end 30a in the vehicle width direction of the electric component cover 30L is positioned further to the inside in the vehicle width direction than the outermost end 30a in the vehicle width direction of the tank side cover 33L as seen in the vehicle front view.

As illustrated in FIG. 2, the electric component cover 30L is disposed further to the inside in the vehicle width direction than the front direction indicator 26L as seen in the vehicle front view. Specifically, the outermost end 30a in the vehicle width direction of the electric component cover 30L is positioned further to the inside in the vehicle width direction than the outermost end 26a in the vehicle width direction of the front direction indicator 26L as seen in the vehicle front view.

The electric component cover 30R exhibits left-right symmetry with the electric component cover 30L. As a result, an explanation of the configuration of the electric component cover 30R will be simplified. The electric component cover 30R is fixed to the first side surface portion 16c via the bracket 39 and covers the electric component 29R from the outside in the vehicle width direction. The electric component cover 30R is disposed so as to be exposed to the outside within the width of the first side surface portion 16c. The electric component cover 30R overlaps a portion of the front fork 21R as seen in the vehicle front view. As illustrated in FIG. 4, the electric component cover 30R includes a recessed portion 50 that corresponds to the recessed portion 47 of the electric component cover 30L. The recessed portion 50 is open for allowing the cord 40 to pass through. The electric component cover 30R does not have a configuration that corresponds to the recessed portion 46 of the electric component cover 30L.

The air vent 31 is provided to ensure heat dissipation of the electric components 29L and 29R. As illustrated in FIG. 4 and 5, the air vent 31 is configured by a gap in the vehicle width direction between the fitting portion 43 and the first side surface portion 14c. Therefore, the entirety of the air vent 31 overlaps the first side surface portion 14c as seen in the vehicle side view. At least a portion of the air vent 31 is disposed between the first side surface portion 14c and the fitting portion 43 and in a position that overlaps the front fork 21L as seen in the vehicle front view. Preferably, at least a portion of the air vent 31 is provided between the first side surface portion 14c and the front end portion 43a and overlaps the front fork 21L as seen in the vehicle front view. At least a portion of the air vent 31 is preferably overlaps the tank side cover 33L as seen in the vehicle plan view. As indicated above, in the present embodiment, the entirety of the fitting portion 43 is disposed so as to be separated from the first side surface portion 14c by a gap in the vehicle width direction. As a result, the air vent 31 is provided between the first side surface portion 14c and each of the front end portion 43a, the rear end portion 43b, the upper end portion 43c, and the lower end portion 43d.

Specifically, as illustrated in FIG. 4 and 5, the air vent 31 includes a front portion air vent 31a, a rear portion air vent 31b, the upper air vent 31c, and a lower air vent 31d. The front portion air vent 31a is configured by a gap in the vehicle width direction between the front end portion 43a and the first side surface portion 14c. The entirety of the front portion air vent 31a overlaps the front fork 21L as seen in the vehicle front view (see FIG. 2). The front portion air vent 31a overlaps a portion between the top bridge 22 and the bottom bridge 23 of the front fork 21L as seen in the vehicle front view. The front portion air vent 31a is positioned further to the inside in the vehicle width direction than the outermost end 25 in the vehicle width direction of the front fork 21L as seen in the vehicle front view.

The rear portion air vent 31b is configured by a gap in the vehicle width direction between the rear end portion 43b and the first side surface portion 14c. The rear portion air vent 31b overlaps the front portion of the tank side cover 33L as seen in the vehicle plan view.

The upper air vent 31c is configured by a gap between the upper end portion 43c and the first side surface portion 14c. The upper air vent 31c overlaps a portion between the top bridge 22 and the bottom bridge 23 of the front fork 21L as seen in the vehicle front view. The upper air vent 31c overlaps the front portion of the tank side cover 33L as seen in the vehicle plan view.

The lower air vent 31d is configured by a gap between the lower end portion 43d and the first side surface portion 14c. A portion of the lower air vent 31d overlaps the front fork 21L as seen in the vehicle front view, and a portion overlaps the front portion of the tank side cover 33L as seen in the vehicle plan view. The lower air vent 31d is disposed further to the outside in the vehicle width direction than the upper air vent 31c. The lower air vent 31d is disposed further to the outside in the vehicle width direction than the upper end portion 43c. The recessed portions 46 and 47 in the present embodiment also function as the air vent 31. The air vent 31 is also provided between the fitting portion (not illustrated) of the electric component cover 30R and the first side surface portion 16c.

In the straddled vehicle 100 according to the above embodiment, at least a portion of each of the air vents 31 is disposed in a position overlapping the front forks 21L and 21R as seen in the vehicle front view, whereby heat dissipation of the electric components 29L and 29R is ensured and the intrusion of rain or dirt scattered from the front of the vehicle into the electric component covers 30L and 30R from the air vents 31 can be suppressed by the front forks 21L and 21R. In addition, at least a portion of each of the air vents 31 is provided in a position that overlaps the tank side covers 33L and 33R as seen in the vehicle plan view, whereby the intrusion of rain or dirt scattered from above the vehicle into the electric component covers 30L and 30R can be suppressed by tank side covers 33L and 33R.

Although an embodiment of the present invention has been described so far, the present invention is not limited to the above embodiment and various modifications may be made within the scope of the invention. The invention is defined by the independent claim and the preferred embodiments by the dependent claims.

For example, the shapes of the vehicle body frame 2, the electric components 29L and 29R, the electric component covers 30L and 30R, and the tank cover 28 are not limited to the embodiment. In addition, while the straddled vehicle 100 in the embodiment includes both the electric component cover 30L and the electric component cover 30R, the straddled vehicle 100 may include only one or the other of the electric component cover 30L and the electric component cover 30R. For example, when the straddled vehicle 100 only includes the electric component cover 30L, the electric component 29R is preferably disposed to the inside in the vehicle width direction of the main frame 12R.

While the entirety of the fitting portion 43 is disposed so as to be separated from the first side surface portion 14c by a gap in the vehicle width direction, a portion of the fitting portion 43 may be in contact with the first side surface portion 14c. That is, the air vent 31 does not necessarily need to be provided across the entirety of the fitting portion 43.

While the bracket 38 is fixed to the first side surface portion 14c in the embodiment, the bracket 38 may be fixed to the electric component cover 30L. 53861223-1

It will be appreciated that the term "straddled vehicle" or "straddled motor vehicle" used herein, and as used in the art, is meant to include the following terms also used in the art:
saddle-ride type vehicle or motor vehicle, saddle-straddling type vehicle or motor vehicle, and includes: motorcycles and motorbikes, as well as motor tricycles and All Terrain Vehicles (ATV's).

## Claims

1. A straddled vehicle (100) comprising:
a head pipe (11);
a main frame (12L) that is exposed to the outside and extends rearward from the head pipe, and includes a side surface portion (14c) that extends in the up-down direction in a cross-section perpendicular to the front-back direction;
front fork(s) (21L, 21R) rotatably supported by the head pipe;
a front wheel (5) rotatably supported by the front forks;
a fuel tank (8) disposed behind the head pipe;
an electric component (29L) disposed in a position on the outside in the vehicle width direction of the main frame and overlapping the side surface portion of the main frame as seen in the vehicle side view;
**characterized by** an electric component cover (30L) that includes a fitting portion (43) for fitting with the side surface portion of the main frame, that is disposed so as to be exposed to the outside within the width of the side surface portion of the main frame, and that covers the electric component from the outside in the vehicle width direction; and
an air vent (31) at least a portion of which is disposed in a position between the side surface portion of the main frame and the fitting portion of the electric component cover, and in a position that overlaps the front forks as seen in the vehicle front view.

2. The straddled vehicle according to claim 1, wherein:
the fitting portion includes a first fitting portion that is positioned on the vehicle forward side as seen in the vehicle side view, and
at least a portion of the air vent is provided between the side surface portion of the main frame and the first fitting portion, and overlaps the front forks as seen in the vehicle front view.

3. The straddled vehicle according to claim 1 or 2, wherein
the electric component cover includes a cover body portion (41) and an attachment portion (42) that is formed in the front-back direction of the cover body portion and is for attaching the cover body portion to the main frame.

4. The straddled vehicle according to any one of claims 1 to 3, wherein
an/the entirety of the electric component cover overlaps the side surface portion of the main frame as seen in the vehicle side view.

5. The straddled vehicle according to any one of claims 1 to 4, wherein
the length in the front-back direction of the electric component cover is longer than the length in the up-down direction as seen in the vehicle side view.

6. The straddled vehicle according to any one of claims 1 to 5, further comprising:
a tank cover (28) for protecting the fuel tank, wherein
the tank cover includes a tank side cover (33L) that covers the fuel tank from the outside in the vehicle width direction, and
the electric component cover is disposed lower than the tank side cover and at least a portion of the electric component cover overlaps the tank side cover as seen in the vehicle plan view.

7. The straddled vehicle according to claim 6, wherein
at least a portion of the air vent overlaps the tank side cover as seen in the vehicle plan view.

8. The straddled vehicle according to claim 6 or 7, wherein
the electric component cover is disposed further to the inside in the vehicle width direction than the tank side cover as seen in the vehicle front view.

9. The straddled vehicle according to any one of claims 1 to 8, wherein
either one of the side surface portion of the main frame or the electric component cover includes a bracket (38) for attaching the electric component.

10. The straddled vehicle according to any one of claims 1 to 9, wherein
the electric component overlaps the entirety of the electric component cover in the electrical component cover as seen in the vehicle front view .

11. The straddled vehicle according to any one of claims 1 to 10, further comprising:
a front direction indicator (26L) supported on the front forks, wherein
the electric component cover is disposed further to the inside in the vehicle width direction than the front direction indicator as seen in the vehicle front view.

## Patentansprüche

1. Spreizsitzfahrzeug (100), umfassend:
ein Steuerrohr (11);
einen Hauptrahmen (12L), der zur Außenseite freigelegt ist und sich vom Steuerrohr aus nach hinten erstreckt und einen Seitenflächenabschnitt (14c) einschließt, der sich in Auf-Ab-Richtung in einem Querschnitt, senkrecht zur Längsrichtung, erstreckt;
Vordergabel(n) (21L, 21R), drehbar durch das Steuerrohr getragen;
ein Vorderrad (5), drehbar durch die Vordergabeln getragen;
einen hinter dem Steuerrohr angeordneten Kraftstofftank (8);
ein elektrisches Bauteil (29L), das in einer Position auf der Außenseite des Hauptrahmens in der Fahrzeugbreitenrichtung angeordnet ist und den Seitenflächenabschnitt des Hauptrahmens überlappt, wenn in der Fahrzeugseitenansicht betrachtet;
**gekennzeichnet durch**
eine Abdeckung des elektrischen Bauteils (30L), die einen Anbringungsabschnitt (43) zum Zusammenpassen mit dem Seitenflächenabschnitt des Hauptrahmens einschließt, die so angeordnet ist, dass sie innerhalb der Breite des Seitenflächenabschnitts des Hauptrahmens zur Außenseite freigelegt ist und die das elektrische Bauteil von der Außenseite in der Fahrzeugbreitenrichtung abdeckt; und
eine Entlüftungsöffnung (31), von der zumindest ein Abschnitt in einer Psotion zwischen dem Seitenflächenabschnitt des Hauptrahmens und dem Anbringungsabschnitt der Abdeckung des elektrischen Bauteils angeordnet ist, und in einer Position, welche die Vordergabeln überlappt, wenn in der Fahrzeugvorderansicht betrachtet.

2. Spreizsitzfahrzeug nach Anspruch 1, wobei:
der Montageabschnitt einen ersten Montageabschnitt einschließt, der, wenn in der Fahrzeugseitenansicht betrachtet, an der Fahrzeugvorderseite positioniert ist, und
zumindest ein Abschnitt der Entlüftungsöffnung zwischen dem Seitenflächenabschnitt des Hauptrahmens und dem ersten Anbringungsabschnitt bereitgestellt wird und die Vordergabeln überlappt, wenn in der Fahrzeugvorderansicht betrachtet.

3. Spreizsitzfahrzeug nach Anspruch 1 oder 2, wobei
die Abdeckung des elektrischen Bauteils einen Abdeckungskörperabschnitt (41) und einen Befestigungsabschnitt (42), der in der Längsrichtung des Abdeckungskörperabschnitts ausgebildet ist und zum Befestigen des Abdeckungskörperabschnitts am Hauptrahmen dient, einschließt.

4. Spreizsitzfahrzeug nach einem der Ansprüche 1 bis 3, wobei
eine/die Gesamtheit der Abdeckung des elektrischen Bauteile den Seitenflächenabschnitt des Hauptrahmens, wenn in der Fahrzeugseitenansicht betrachtet, überlappt.

5. Spreizsitzfahrzeug nach einem der Ansprüche 1 bis 4, wobei
die Länge der Abdeckung des elektrischen Bauteils in der Längsrichtung länger ist als die Länge in der Querrichtung, wenn in der Fahrzeugseitenansicht betrachtet.

6. Spreizsitzfahrzeug nach einem der Ansprüche 1 bis 5, weiter umfassend:
eine Tankabdeckung (28) zum Schützen des Kraftstofftanks,
wobei die Tankabdeckung eine Tankseitenabdeckung (33L) einschließt, die den Kraftstofftank von der Außenseite in der Fahrzeugbreitenrichtung abdeckt, und
die Abdeckung des elektrischen Bauteils tiefer angeordnet ist als die Tankseitenabdeckung und zumindest ein Abschnitt der Abdeckung des elektrischen Bauteils die Tankseitenabdeckung überlappt, wenn in der Fahrzeugdraufsicht betrachtet.

7. Spreizsitzfahrzeug nach Anspruch 6, wobei
zumindest ein Abschnitt der Entlüftungsöffnung die Tankseitenabdeckung überlappt, wenn in der Fahrzeugdraufsicht betrachtet.

8. Spreizsitzfahrzeug nach Anspruch 6 oder 7, wobei
die Abdeckung des elektrischen Bauteils weiter zur Innenseite in der Fahrzeugbreitenrichtung angeordnet ist als die Tankseitenabdeckung, wenn in der Fahrzeugvorderansicht betrachtet.

9. Spreizsitzfahrzeug nach einem der Ansprüche 1 bis 8, wobei
entweder der Seitenflächenabschnitt des Hauptrahmens oder die Abdeckung des elektrischen Bauteils eine Halterung (38) zum Befestigen des elektrischen Bauteils einschließt.

10. Spreizsitzfahrzeug nach einem der Ansprüche 1 bis 9, wobei
das elektrische Bauteil die Gesamtheit der Abdeckung des elektrischen Bauteils in der Abdeckung des elektrischen Bauteils überlappt, wenn in der Fahrzeugvorderansicht betrachtet.

11. Spreizsitzfahrzeug nach einem der Ansprüche 1 bis 10, weiter umfassend:
einen an den Vorderradgabeln getragenen vorderen Richtungsindikator (26L), wobei\
die Abdeckung der elektrischen Bauteile weiter zur Innenseite in der Fahrzeugbreitenrichtung angeordnet ist als der vordere Richtungsindikator, wenn in der Fahrzeugvorderansicht betrachtet.

## Revendications

1. Véhicule à enfourcher (100) comprenant :
un tube de tête (11) ;
un châssis principal (12L) qui est exposé à l'extérieur et s'étend vers l'arrière à partir du tube de tête, et inclut une partie de surface latérale (14c) qui s'étend dans la direction haut-bas dans une section transversale perpendiculaire à la direction avant-arrière ;
une/des fourche(s) avant (21L, 21R) supportée(s) de manière rotative par le tube de tête ;
une roue avant (5) supportée de manière rotative par les fourches avant ;
un réservoir de carburant (8) disposé derrière le tube de tête ;
un composant électrique (29L) disposé dans une position sur le côté extérieur dans le sens de la largeur du véhicule du châssis principal et recouvrant la partie de surface latérale du châssis principal comme on le voit dans la vue de côté du véhicule ;
**caractérisé par**
un couvercle de composant électrique (30L) qui inclut une partie de fixation (43) destinée à être montée sur la partie de surface latérale du châssis principal, qui est disposée de manière à être exposée à l'extérieur dans la largeur de la partie de surface latérale du châssis principal, et qui recouvre le composant électrique de l'extérieur dans le sens de la largeur du véhicule ; et
une ventilation (31), dont au moins une partie est disposée dans une position entre la partie de surface latérale du châssis principal et la partie de fixation du couvercle du composant électrique, et dans une position qui recouvre les fourches avant comme on le voit sur la vue de face du véhicule.

2. Véhicule à enfourcher selon la revendication 1, dans lequel :
la partie de fixation inclut une première partie de fixation qui est positionnée sur le côté avant du véhicule, comme on peut le voir sur la vue de côté du véhicule, et
au moins une partie de la ventilation est prévue entre la partie de surface latérale du châssis principal et la première partie de fixation, et recouvre les fourches avant comme on peut le voir sur la vue de face du véhicule.

3. Véhicule à enfourcher selon la revendication 1 ou 2, dans lequel
le couvercle du composant électrique inclut une partie de corps de couvercle (41) et une partie d'attache (42) qui est formée dans le sens avant-arrière de la partie de corps de couvercle et sert à attacher la partie de corps de couvercle au châssis principal.

4. Véhicule à enfourcher selon l'une quelconque des revendications 1 à 3, dans lequel
un/l'intégralité du couvercle du composant électrique recouvre la partie de surface latérale du châssis principal, comme on peut le voir sur la vue latérale du véhicule.

5. Véhicule à enfourcher selon l'une quelconque des revendications 1 à 4, dans lequel
la longueur du couvercle du composant électrique dans le sens avant-arrière est supérieure à la longueur dans le sens haut-bas, comme on peut le voir sur la vue de côté du véhicule.

6. Véhicule à enfourcher selon l'une quelconque des revendications 1 à 5, comprenant en outre :
un couvercle de réservoir (28) pour protéger le réservoir de carburant,
dans lequel le couvercle de réservoir inclut un couvercle latéral de réservoir (33L) qui recouvre le réservoir de carburant de l'extérieur dans le sens de la largeur du véhicule, et
le couvercle du composant électrique est disposé plus bas que le couvercle latéral de réservoir et au moins une partie du couvercle du composant électrique recouvre le couvercle latéral de réservoir, comme on peut le voir sur la vue en plan du véhicule.

7. Véhicule à enfourcher selon la revendication 6, dans lequel
au moins une partie de la ventilation recouvre le couvercle latéral du réservoir, comme on peut le voir sur la vue en plan du véhicule.

8. Véhicule à enfourcher selon la revendication 6 ou 7, dans lequel
le couvercle du composant électrique est disposé plus à l'intérieur, dans le sens de la largeur du véhicule, que le couvercle latéral de réservoir, comme on peut le voir sur la vue de face du véhicule.

9. Véhicule à enfourcher selon l'une quelconque des revendications 1 à 8, dans lequel
l'un de la partie de surface latérale du châssis principal ou du couvercle du composant électrique inclut un support (38) pour attacher le composant électrique.

10. Véhicule à enfourcher selon l'une quelconque des revendications 1 à 9, dans lequel
le composant électrique recouvre l'intégralité du couvercle du composant électrique, comme on peut le voir sur la vue de face du véhicule.

11. Véhicule à enfourcher selon l'une quelconque des revendications 1 à 10, comprenant en outre :
un indicateur de direction avant (26L) supporté sur les fourches avant, dans lequel
le couvercle du composant électrique est disposé plus à l'intérieur, dans le sens de la largeur du véhicule, que l'indicateur de direction avant, comme on peut le voir sur la vue de face du véhicule.
